# EUROPÄISCHE PATENTSCHRIFT

(11) **EP 2 734 891 B1**
(45) Veröffentlichungstag und Bekanntmachung des Hinweises auf die Patenterteilung: **19.11.2014**
(21) Anmeldenummer: 12734896.9
(22) Anmeldetag: 05.07.2012
(51) Int. Cl.: G02C 5/12

(54) **BRILLE**
SPECTACLES
LUNETTES

(30) Priorität: 18.07.2011 DE 102011079358
(43) Veröffentlichungstag der Anmeldung: 28.05.2014
(73) Patentinhaber: Uvex Arbeitsschutz GmbH, 90766 Fürth (DE)
(72) Erfinder: TÄUBER, Manfred, 90579 Langenzenn (DE)
(74) Vertreter: Rau, Schneck & Hübner Patentanwälte Rechtsanwälte PartGmbB
(86) Internationale Anmeldenummer: PCT/EP2012/063077
(87) Internationale Veröffentlichungsnummer: WO 2013/010799

(56) Entgegenhaltungen:
- EP-A1- 0 239 659
- WO-A1-2007/148352
- JP-A- 2005 128 066
- US-A- 5 828 438

## Beschreibung

Die Erfindung betrifft eine Brille, insbesondere eine Arbeitsschutzbrille. Sie kann auch für andere Brillen, wie Sportbrillen, optische Brillen oder dergleichen, vorgesehen sein.

Aus der JP 2005-128066 A sind verschiedene Nasenauflagen für Brillen bekannt. Die Nasenauflagen weisen Nasenauflageelemente auf, die über Kupplungsstücke an einem Brillenrahmen befestigbar sind. Jedes Nasenauflageelement hat einen umschlossenen Innenraum. Gegenüberliegend zu einem Kupplungsstück ist jeweils ein freier, seitlicher Steg vorgesehen. Die Innenräume erlaube eine elastische Deformation des Nasenauflageelements.

Die WO 2007/148352 A1 offenbart unterschiedliche Nasenauflagen für Brillen. Eine Nasenauflage umfasst zwei einander gegenüberliegende Nasenauflageelemente, die jeweils innere Nasenauflagestege haben. Jede Nasenauflage weist außerdem einen Haltekörper auf, dessen Kopf in einer in dem Nasenauflageelement gebildeten Aufnahme sitzt.

Aus der EP 0 239 659 A1 ist eine Brille bekannt, die eine Nasenauflage zur Abstützung gegenüber einer Nase eines Brillenträgers aufweist. An dem Brillenrahmen sind Schlitzlöcher vorgesehen, die zum Einklippen von Weich-Pads dienen.

In der US 5 526 070 ist eine Nasenauflage für eine Brille beschrieben. Die Nasenauflage umfasst starre Nasenauflageelement-Fixierabschnitte, die an dem Brillenrahmen oder einer Brillenlinse fixierbar sind. Ferner umfasst die Nasenauflage ein weiches Element, das die starren Nasenauflageele ment-Fixierabschnitte teilweise umgibt. Die Nasenauflage hat außerdem ein zweites weiches Element, das über Rohrstücke mit dem ersten weichen Element verbunden ist.

Die DE 79 32 968 U1 offenbart eine Seitenstegpartie für Brillenfassungen mit an den Augenrändern mittels einer Punktbefestigung inklinierbar angeordneten Seitenstegstützen. An den Seitenstegstützen sind Seitenstegplättchen schwenkbar gelagert, die weich und elastisch sind.

Eine in der DE 298 05 378 U1 offenbarte Brille umfasst einen Rahmen und eine an dem Rahmen angebrachte Nasenbrücke. Die Nasenbrücke wiederum hat zwei ringförmige Schlaufen, die an beabstandeten Ende der Nasenbrücke angeordnet sind.

In der US 2 270 330 ist eine Brille beschrieben, die einen Brillenrahmen und eine an dem Brillenrahmen angeformte Nasenauflage aufweist. Die Nasenauflage umfasst Nasenauflagenelemente, die umfangsseitig geschlossen sind und einen inneren Raum umgeben. Die Nasenauflagenelemente haben im Wesentlichen die Form eines Tropfens.

Die JP 10319355 A offenbart eine Nasenauflage für eine Brille. Die Nasenauflage hat Nasenauflageelemente, die jeweils ein erstes hartes Plattenstück und ein zweites weiches Plattenstück umfassen. Die zweiten Plattenstücke stehen jeweils mit den ersten Plattenstücken in Verbindung und sind zur Anlage an der Nase eines Trägers vorgesehen.

In der US 5 828 438 ist eine Nasenauflage beschrieben, die zwei Nasenauflageelemente umfasst. Jedes Nasenauflageelement hat eine längliche Öffnung.

Aus dem Stand der Technik ist weiterhin durch offenkundige Vorbenutzung eine Vielzahl von Brillen bekannt, die sich über ihre Nasenauflagen gegenüber der Nase eines Trägers bzw. Brillenträgers abstützen. Die Nasenauflagen umfassen im Allgemeinen Nasenauflageelemente, die polster- bzw. kissenartig ausgebildet sind. Nachteilig an diesen bekannten Brillen ist, dass diese oftmals beim Tragen verrutschen und/oder beim Tragen unbequem sind.

Hiervon ausgehend liegt der Erfindung die Aufgabe zugrunde, eine Brille bereitzustellen, die einen äußerst hohen Tragekomfort bietet. Ferner soll die Brille besonders sicher auf der Nase eines Trägers sitzen und kostengünstig herstellbar sein.

Diese Aufgabe wird erfindungsgemäß durch die in dem Anspruch 1 angegebenen Merkmale gelöst. Der Kern der Erfindung liegt darin, dass die Nasenauflageelemente hohl und in ihrer Umfangsrichtung quasi endlos ausgebildet sind. Es ist von Vorteil, wenn der insbesondere unbefüllte Innenraum einseitig oder beidseitig stirnseitig offen ist. Vorzugsweise ist der Innenraum jeweils durchgängig. Die Nasenauflageelemente haben beispielsweise eine kreisringförmige, ovale, eiförmige oder rechteckige Kontur. Eine längliche Form ist bevorzugt. Die Nasenauflage ist vorzugsweise an dem Brillenrahmen angeordnet. Sie kann aber auch an der mindestens einen Brillenscheibe angeordnet sein.

Der Nasenauflageelement-Nasenauflagesteg ermöglicht auch ein bequemes Tragen und einen sicheren Halt.

Die Nasenauflageelement-Fixierabschnitte bewirken eine äußerst sichere Fixierung des jeweiligen Nasenauflageelements.

Das Anspritzen der Nasenauflageelemente an das Nasengestell ermöglicht eine äußerst kostengünstige Fertigung. Ferner sind die Nasenauflageelemente so verliersicher an dem Nasengestell fixiert.

Die keilartige Ausgestaltung ergibt eine äußerst sichere und belastbare Verbindung zwischen den Nasenauflageelementen und dem Nasengestell.

Es ist von Vorteil, wenn die Brille zwei Brillenscheiben hat. Gemäß einer alternativen Ausgestaltung hat die Brille genau eine einstückige, durchgehende Brillenscheibe.

Der Brillenrahmen und die mindestens eine Brillenscheibe können separat ausgeführt sein. Alternativ sind sie einstückig miteinander verbunden.

Weitere vorteilhafte Ausgestaltungen der Erfindung sind in den Unteransprüchen angegeben.

Die Ausgestaltung nach Anspruch 2 führt zu Nasenauflageelementen, die besonders kostengünstig herstellbar sind. Ferner bieten derartige Nasenauflageelemente einen hohen Tragekomfort und einen besonders guten Halt. Vorzugsweise sind die Nasenauflageelemente aus thermoplastischen Elastomeren auf Basis von Styrolblockcopolymeren (TPE-S) gebildet. Es ist von Vorteil, wenn die Nasenauflageelemente eine Shore-Härte A zwischen 40 und 80, bevorzugter zwischen 50 und 70, aufweisen. Sie sind vorzugsweise weich ausgebildet.

Die Ausgestaltung nach Anspruch 3 ist aus Fertigungsgründen äußerst vorteilhaft. Zweckmäßigerweise ist das Nasengestell aus Polycarbonat (PC) und/oder thermoplastischem Polyurethan (TPU) gebildet.

Gemäß Anspruch 4 ist das Nasengestell an dem Brillenrahmen befestigt. Das Nasengestell kann lösbar oder unlösbar an dem Brillenrahmen befestigt sein.

Das Nasengestell nach Anspruch 5 begrenzt so einen Nasenaufnahmeraum zur Aufnahme der Nase eines Trägers.

Die Ausgestaltung nach Anspruch 6 führt zu einer Nasenauflage, die einerseits eine hohe Stabilität und andererseits einen besonders angenehmen Tragekomfort bietet.

Die Ausbildung nach Anspruch 7 führt zu einer Nasenauflage, die ein äußerst bequemes Tragen ermöglicht und andererseits eine sichere Fixierung der Brille an dem Brillenträger erlaubt.

Auch die Ausgestaltung nach Anspruch 9 ermöglicht ein äußerst sicheres und bequemes Tragen der Brille.

Vorzugsweise ist mindestens ein Brillen-Haltemittel zum Halten der Brille an dem Kopf des Brillenträgers vorgesehen, wobei das mindestens eine Brillen-Haltemittel vorzugsweise ein verschwenkbarer Brillenbügel ist. Alternativ ist das Brillen-Haltemittel als Halteband ausgebildet, das den Hinterkopf eines Trägers umläuft. Es ist von Vorteil, wenn das mindestens eine Brillen-Haltemittel an dem Brillenrahmen oder an der mindestens einen Brillenscheibe angebracht ist.

Nachfolgend wird unter Bezugnahme auf die beigefügte Zeichnung eine bevorzugte Ausführungsform der Erfindung beschrieben. Dabei zeigen:
- Fig. 1: eine rückseitige, perspektivische Ansicht einer erfindungsgemäßen Brille,
- Fig. 2: eine Vorderansicht der Brille von Fig. 1, wobei keine Brillenscheiben dargestellt sind, und
- Fig. 3: einen Längsschnitt gemäß der in Fig. 2 dargestellten Schnittlinie III-III.

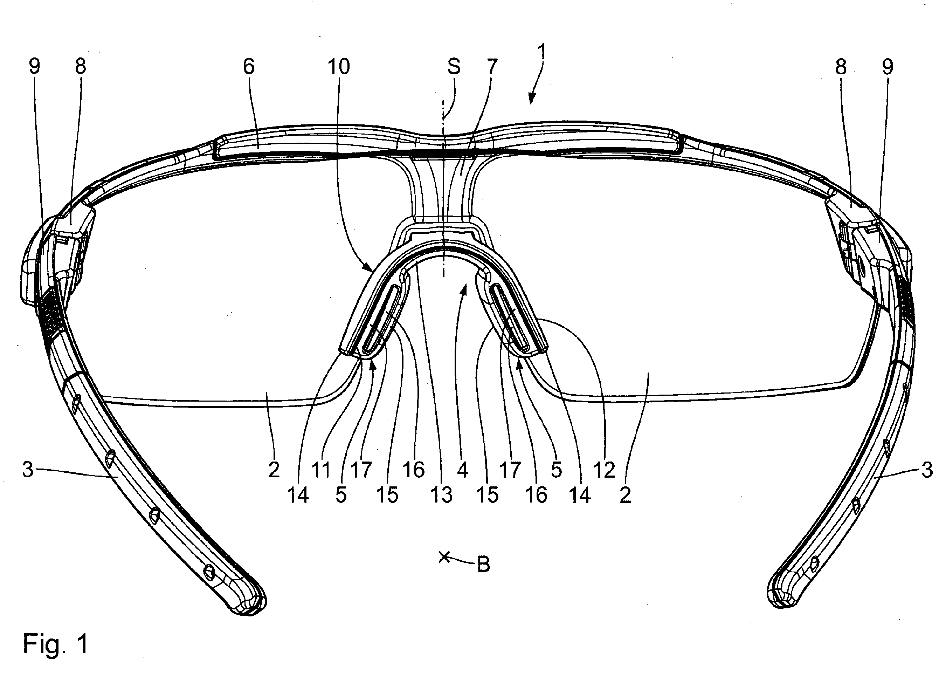

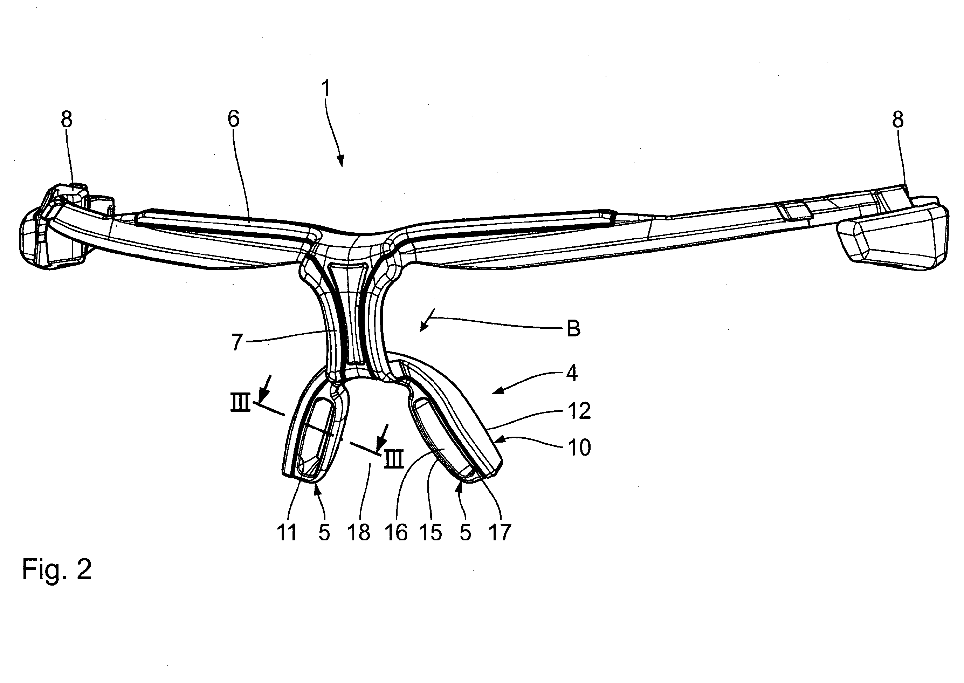

Einander entsprechende Teile sind in den Fig. 1 bis 3 mit denselben Bezugszeichen versehen. Auch Einzelheiten des im Folgenden näher erläuterten Ausführungsbeispiels können für sich genommen eine Erfindung darstellen oder Teil eines Erfindungsgegenstands sein.

Eine in Fig. 1 in ihrer Gesamtheit dargestellte Brille umfasst einen Brillenrahmen 1, zwei von dem Brillenrahmen 1 gehaltene Brillenscheiben 2 und zwei an dem Brillenrahmen 1 endseitig angelenkte Brillenbügel 3. Ferner umfasst die Brille eine an dem Brillenrahmen 1 mittig angeordnete Nasenauflage 4 mit zwei einander gegenüberliegenden Nasenauflageelementen 5. Die Brille ist bezüglich einer Symmetrieebene S symmetrisch ausgebildet, die zwischen den beiden Brillenscheiben 2 verläuft. Der Brillenrahmen 1 ist vorzugsweise aus einem Kunststoffmaterial gebildet. Die Brille hat eine Blickrichtung B.

Der Brillenrahmen 1 umfasst ein oberes Rahmenteil 6 und ein von dem oberen Rahmenteil 6 mittig nach unten springendes Nasenauflage-Halteteil 7. Alternativ kann der Brillenrahmen 1 die Brillenscheiben 2 vollständig umlaufen bzw. umgeben.

Die Brillenscheiben 2 schließen sich unten an das Rahmenteil 6 und seitlich außen an das Nasenauflage-Halteteil 7 an. Sie können getönt sein.

Das obere Rahmenteil 6 hat zwei einander gegenüberliegende Enden 8. An den Enden 8 sind die Brillenbügel 3 über entsprechende Lageranordnungen 9 angelenkt, die ein herkömmliches Verschwenken der Brillenbügel 3 ermöglichen.

Mit dem unteren freien Ende des Nasenauflage-Halteteils 7 ist ein Nasengestell 10 fest verbunden. Das Nasengestell 10 und das Nasenauflage-Halteteil 7 können lösbar oder unlösbar aneinander befestigt sein. Das Nasengestell 10 ist bogenförmig ausgeführt. Es verläuft von dem Nasenauflage-Halteteil 7 nach unten außen. Das Nasengestell 10 hat eine Nasenseite 11 und eine der Nasenseite 11 gegenüberliegende Außenseite 12. Wenn die Brille bestimmungsgemäß getragen wird, so ist die Nasenseite 11 des Nasengestells 10 der Nase des Trägers zugewandt, während die Außenseite 12 dementsprechend der Nase des Trägers abgewandt ist. Das Nasengestell 10 ist aus einem Kunststoffmaterial gebildet, das identisch zu dem Kunststoffmaterial des Brillenrahmens 1 sein kann. Es hat eine hohe Steifigkeit, so dass es im Wesentlichen unnachgiebig bzw. hart ist.

Die Nasenauflageelemente 5 haben einen gemeinsamen Fixierbereich 13, der an dem Nasengestell 10 befestigt ist. Der Fixierbereich 13 erstreckt sich an der Nasenseite 11 des Nasengestells 10 zwischen den unteren Enden 14 des Nasengestells 10 und verbindet die Nasenauflageelemente 5 miteinander. Die Nasenauflageelemente 5 können alternativ separat ausgebildet sein. Günstigerweise sind die Nasenauflageelemente 5 über ihren Fixierbereich 13 an das Nasengestell 10 angespritzt.

Jedes Nasenauflageelement 5 umfasst ferner einen Nasenauflagesteg 15, der benachbart von dem jeweiligen unteren Ende 14 des Nasengestells 10 in Richtung auf das Nasenauflage-Halteteil 7 verläuft. Die Nasenauflagestege 15 sind länglich ausgebildet und sind mit ihren Enden mit dem Fixierbereich 13 verbunden. Sie verlaufen zwischen ihren fixen Enden im Wesentlichen jeweils frei, wodurch den Nasenauflagestegen 15 eine gewisse Flexibilität verliehen wird. Der Fixierbereich 13 und die Nasenauflagestege 15 sind einstückig miteinander verbunden. Sie sind aus einem Kunststoffmaterial gebildet, das weicher, vorzugsweise wesentlich weicher, als das Kunststoffmaterial des Nasengestells 10 ist. Die Nasenauflagestege 15 sind derart ausgestaltet, dass diese nachgiebig, weich bzw. flexibel sind. Durch die Nasenauflagestege 15 und den Fixierbereich 13 sind Innenräume 16 nach seitlich außen begrenzt. Dadurch sind die Innenräume 16 umfangsseitig geschlossen. Die Nasenauflageelemente 5 sind vorzugsweise als umfangsseitig geschlossene Schlingenkörper ausgeführt. Bei den Nasenauflageelementen 5 hat der Fixierbereich 13 Nasenauflageelement-Fixierabschnitte 17. Die Nasenauflagestege 15 verlaufen im Wesentlichen parallel und beabstandet zu den Nasenauflageelement-Fixierabschnitten 17.

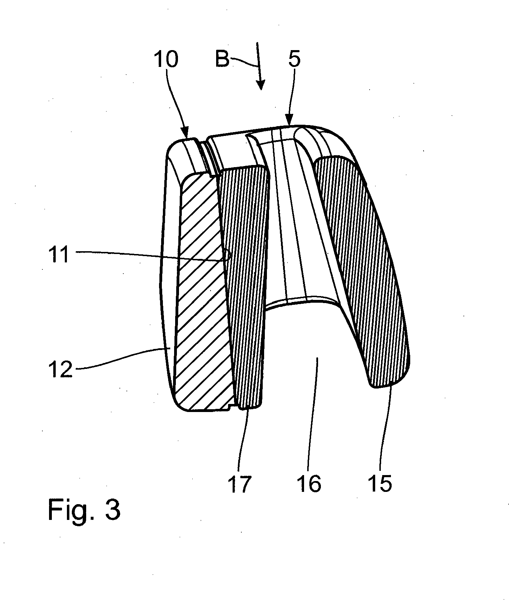

Die Nasenauflageelement-Fixierabschnitte 17 und der benachbarte Bereich des Nasengestells 10 sind jeweils in Blickrichtung B der Brille keilartig ausgebildet. Wie insbesondere aus Fig. 3 hervorgeht, verjüngt sich der Nasenauflageelement-Fixierabschnitt 17 in Blickrichtung B der Brille im Wesentlichen kontinuierlich, während sich das Nasengestell 10 dort entsprechend in Blickrichtung B der Brille im Wesentlichen kontinuierlich erweitert. Entsprechend erweitern sich auch die Innenräume 16 in Blickrichtung B der Brille im Wesentlichen kontinuierlich. Als Blickrichtung B der Brille wird diejenige Richtung verstanden, in die der Brillenträger durch die Brillenscheiben 2 bei bestimmungsgemäßem Gebrauch der Brille schaut. Die Nasenauflageelemente 5 sind im Wesentlichen in Blickrichtung B offen.

Wenn ein Träger die Brille trägt, so liegen die Brillenbügel 3 seitlich an dem Kopf des Trägers an. Die Brillenscheiben 2 sind vor den Augen des Trägers angeordnet, während die Nase des Trägers in den durch das Nasengestell 10 begrenzten Nasen-Aufnahmeraum 18 ragt. Die Nase des Trägers kann oben an dem Fixierbereich 13 anliegen. Ferner liegen die Nasenauflageelemente 5 mit ihren Nasenauflagestegen 15 seitlich an den Nasenflügeln des Trägers flächig an. Die Nasenauflagestege 15 passen sich dabei an die jeweilige Form der Nase des Trägers an. Sie können sich zwischen ihren fixen Enden entsprechend in den jeweiligen benachbarten Innenraum 16 krümmen. Die Nasenauflageelement-Fixierabschnitte 17 sind beabstandet zu der Nase des Trägers angeordnet.

Jeder Nasenauflageelement-Fixierabschnitt 17 ist im Wesentlichen in Richtung senkrecht zu der Blickrichtung B der Brille zu dem zugeordneten, benachbarten Nasenauflagesteg 15 angeordnet. Jeder Nasenauflage-Fixierabschnitt 17 ist zwischen dem zugeordneten, benachbarten Nasenauflagesteg 15 und dem Nasengestell 10 bzw. der benachbarten Brillenscheibe 2 angeordnet. Jeder Nasenauflageelement-Fixierabschnitt 17 hat einen größeren Abstand zu der Nase des Brillenträgers als der zugeordnete, benachbarte Nasenauflagesteg 15, wenn die Brille bestimmungsgemäß von dem Brillenträger getragen wird. Die Nasenauflagestege 15 liegen einander gegenüber und begrenzen eine Nasenaufnahme zur Aufnahme der Nase des Brillenträgers, wenn die Brille bestimmungsgemäß getragen wird.

## Patentansprüche

1. Brille, umfassend
a. mindestens eine Brillenscheibe (2),
b. einen Brillenrahmen (1), der die mindestens eine Brillenscheibe (2) trägt, und
c. eine Nasenauflage (4) zur Abstützung gegenüber der Nase eines Brillenträgers, wobei die Nasenauflage (4) mindestens zwei einander gegenüberliegende Nasenauflageelemente (5) und ein Nasengestell (10) zum Tragen der Nasenauflageelemente (5) umfasst, wobei die Nasenauflageelemente (5) jeweils umfangseitig geschlossene, einen Innenraum (16) umgebende Endloskörper sind,
- wobei jedes Nasenauflageelement (5) einen teilweise freien, seitlichen Nasenauflageelement-Nasenauflagesteg (15) zur Auflage auf der Nase des Brillenträgers aufweist, wobei der Nasenauflageelement-Nasenauflagesteg (15) vorzugsweise nachgiebig ist, und
- wobei jedes Nasenauflageelement (5) einen fixierten, seitlichen Nasenauflageelement-Fixierabschnitt (17) aufweist, der gegenüberliegend zu dem zugehörigen Nasenauflageelement-Nasenauflagesteg (15) und im Wesentlichen parallel zu diesem verläuft, wobei die Nasenauflageelemente (5) über die Nasenauflageelement-Fixierabschnitte (17) an dem Nasengestell (10) fixiert sind,
**dadurch gekennzeichnet, dass**
d. die Nasenauflageelemente (5) an das Nasengestell (10) angespritzt sind, und
e. die Nasenauflageelement-Fixierabschnitte (17) und das Nasengestell (10) zumindest in den an die Nasenauflageelement-Fixierabschnitte (17) angrenzenden Bereichen jeweils im Wesentlichen in Blickrichtung (B) der Brille keilartig ausgebildet sind, wobei der Keilverlauf des Nasengestel ls (10) und der Nasenauflageelement-Fixierabschnitte (17) in Blickrichtung (B) der Brille gegensinnig ist.

2. Brille nach Anspruch 1, **dadurch gekennzeichnet, dass** die Nasenauflageelemente (5) aus einem ersten Kunststoffmaterial gebildet sind.

3. Brille nach Anspruch 1 oder 2, **dadurch gekennzeichnet, dass** das Nasengestell (10) aus einem zweiten Kunststoffmaterial gebildet ist.

4. Brille nach Anspruch 3, **dadurch gekennzeichnet, dass** das Nasengestell (10) an dem Brillenrahmen (1) befestigt ist.

5. Brille nach Anspruch 3 oder 4, **dadurch gekennzeichnet, dass** das Nasengestell (10) im Wesentlichen bogenförmig ausgeführt ist.

6. Brille nach einem der Ansprüche 3 bis 5, **dadurch gekennzeichnet, dass** die Nasenauflageelemente (5) jeweils weicher, vorzugsweise wesentlich weicher, als das Nasengestell (10) ausgebildet sind.

7. Brille nach einem der vorherigen Ansprüche, **dadurch gekennzeichnet, dass** sich die Querschnittsfläche des Innenraums (16) der Nasenauflageelemente (5) in Blickrichtung (B) der Brille verändert, vorzugweise erweitert.

8. Brille nach einem der vorherigen Ansprüche, **dadurch gekennzeichnet, dass** die Nasenauflageelemente (5) im Wesentlichen in Blickrichtung (B) der Brille betrachtet eine längliche Grundform zur Anlage an den Nasenflügeln des Brillenträgers haben.

9. Brille nach einem der vorherigen Ansprüche, **dadurch gekennzeichnet, dass** die einander gegenüberliegenden Nasenauflageelemente (5) schräg zueinander verlaufen.

10. Brille nach einem der vorherigen Ansprüche, **dadurch gekennzeichnet, dass** die Nasenauflageelement-Fixierabschnitte (17) beabstandet zu der Nase des Brillenträgers angeordnet sind, wenn der Brillenträger die Brille trägt.

11. Brille nach einem der vorherigen Ansprüche, **dadurch gekennzeichnet, dass** die Nasenauflageelemente (5) im Wesentlichen in Blickrichtung (B) der Brille offen sind.

12. Brille nach einem der vorherigen Ansprüche, **dadurch gekennzeichnet, dass** die Nasenauflageelemente (5) mit ihren Nasenauflageelement-Nasenauflagestegen (15) seitlich an den Nasenflügeln des Brillenträgers flächig anliegen, wenn der Brillenträger die Brille trägt.

## Claims

1. Goggles, comprising
a. at least one goggles lens (2),
b. a goggles frame (1), which carries the at least one goggles lens (2), and
c. a nose pad (4) for support relative to the nose of a goggles wearer, the nose pad (4) comprising at least two mutually opposing nose pad elements (5) and a nose mount (10) to carry the nose pad elements (5), the nose pad elements (5) being, in each case, peripherally closed continuous bodies surrounding an interior (16),
- wherein each nose pad element (5) has a partially free, lateral nose pad element-nose pad web (15) for placing on the nose of the goggles wearer, the nose pad element-nose pad web (15) preferably being yielding, and
- wherein each nose pad element (5) has a fixed, lateral nose pad element fixing portion (17), which runs opposite the associated nose pad element-nose pad web (15) and substantially parallel thereto, with the nose pad elements (5) being fixed to the nose mount (10) by means of the nose pad element fixing portions (17),
**characterized in that**
d. the nose pad elements (5) are molded onto the nose mount (10), and
e. the nose pad element fixing portions (17) and the nose mount (10) are wedge-like, in each case, substantially in the viewing direction (B) of the goggles, at least in the regions adjoining the nose pad element fixing portions (17), the wedge course of the nose mount (10) and of the nose pad element fixing portions (17) being in opposite directions in the viewing direction (B) of the goggles.

2. Goggles according to claim 1, **characterized in that** the nose pad elements (5) are formed from a first plastics material.

3. Goggles according to claim 1 or 2, **characterized in that** the nose mount (10) is formed from a second plastics material.

4. Goggles according to claim 3, **characterized in that** the nose mount (10) is fastened to the goggles frame (1).

5. Goggles according to claim 3 or 4, **characterized in that** the nose mount (10) is substantially arcuate.

6. Goggles according to any one of claims 3 to 5, **characterized in that** the nose pad elements (5) are in each case softer, preferably substantially softer, than the nose mount (10).

7. Goggles according to any one of the preceding claims, **characterized in that** the cross-sectional area of the interior (16) of the nose pad elements (5) changes, preferably widens, in the viewing direction (B) of the goggles.

8. Goggles according to any one of the preceding claims, **characterized in that** the nose pad elements (5) have an elongate basic shape for resting on the nostrils of the goggles wearer, viewed substantially in the viewing direction (B) of the goggles.

9. Goggles according to any one of the preceding claims, **characterized in that** the mutually opposing nose pad elements (5) run obliquely with respect to one another.

10. Goggles according to any one of the preceding claims, **characterized in that** the nose pad element fixing portions (17) are arranged spaced apart from the nose of the goggles wearer when the goggles wearer is wearing the goggles.

11. Goggles according to any one of the preceding claims, **characterized in that** the nose pad elements (5) are open substantially in the viewing direction (B) of the goggles.

12. Goggles according to any one of the preceding claims, **characterized in that** the nose pad elements (5) rest flat with their nose pad element-nose pad webs (15) laterally on the nostrils of the goggles wearer when the goggles wearer is wearing the goggles.

## Revendications

1. Lunettes, comprenant
a. au moins un verre (2) de lunettes,
b. une monture (1) de lunettes qui porte au moins un verre (2) de lunettes, et
c. un support nasal (4) pour un appui contre le nez du porteur de lunettes, le support nasal (4) comprenant au moins deux éléments (5) de support nasal se faisant face et un cadre nasal (10) pour le port des éléments (5) de support nasal, chaque élément (5) de support nasal constituant un corps de ligne sans fin entourant le périmètre d'un espace intérieur (16),
- chaque élément (5) de support nasal présentant un pontet (15) de support nasal pour élément de support nasal latéral, partiellement libre, pour l'appui du nez du porteur de lunettes, le pontet (15) de support nasal pour élément de support nasal étant de préférence flexible, et
- chaque élément (5) de support nasal présentant une section de fixation (17) de l'élément de support nasal fixée, latérale, qui est située en face du pontet (15) de support nasal pour l'élément de support nasal correspondant et s'étend dans l'ensemble parallèlement à celui-ci, les éléments (5) de support nasal étant fixés pardessus les sections de fixation (17) de l'élément de support nasal sur le cadre nasal (10), **caractérisées en ce que**
d. les éléments (5) de support nasal sont surmoulés par pulvérisation sur le cadre nasal (10), et
e. les sections de fixation (17) de l'élément de support nasal et le cadre nasal (10) sont conçus, chacun, au moins dans les zones avoisinant les sections de fixation (17) de l'élément de support nasal, en forme de cônes essentiellement dans la direction de vision (B) des lunettes, les dessins des cônes du cadre nasal (10) et des sections de fixation (17) de l'élément de support nasal étant opposés dans la direction de vision (B) des lunettes.

2. Lunettes selon la revendication 1, **caractérisées en ce que** les éléments (5) de support nasal sont constitués dans un premier matériau en substance synthétique.

3. Lunettes selon les revendications 1 ou 2, **caractérisées en ce que** le cadre nasal (10) est constitué d'un deuxième matériau en substance synthétique.

4. Lunettes selon la revendication 3, **caractérisées en ce que** le cadre nasal (10) est fixé sur la monture (1) des lunettes.

5. Lunettes selon les revendications 3 ou 4, **caractérisées en ce que** le cadre nasal (10) est conçu essentiellement sous la forme d'un arc.

6. Lunettes selon l'une des revendications 3 à 5, **caractérisées en ce que** les éléments (5) de support nasal sont, chacun, conçus plus mous, de préférence, beaucoup plus mous, que le cadre nasal (10).

7. Lunettes selon l'une des revendications précédentes, **caractérisées en ce que** la surface transversale de l'espace intérieur (16) des éléments (5) de support nasal est variable, de préférence s'élargit, dans la direction de vision (B) des lunettes.

8. Lunettes selon l'une des revendications précédentes, **caractérisées en ce que** les éléments (5) de support nasal possèdent dans l'ensemble une forme de base allongée dans la direction de vision (B) des lunettes, pour l'appui des ailes du nez du porteur de lunettes.

9. Lunettes selon l'une des revendications précédentes, **caractérisées en ce que** les éléments (5) de support nasal opposés l'un à l'autre s'étendent de manière oblique l'un par rapport à l'autre.

10. Lunettes selon l'une des revendications précédentes, **caractérisées en ce que** les sections de fixation (17) de l'élément de support nasal sont disposées espacées du nez du porteur de lunettes lorsque le porteur de lunettes porte les lunettes.

11. Lunettes selon l'une des revendications précédentes, **caractérisées en ce que** les éléments (5) du support nasal sont dans l'ensemble ouverts dans la direction de vision (B) des lunettes.

12. Lunettes selon l'une des revendications précédentes, **caractérisées en ce que** les éléments (5) de support nasal s'appuient à plat latéralement sur les ailes du nez du porteur de lunettes avec leurs pontets (15) de support nasal pour les éléments de support nasal.
